# EUROPEAN PATENT APPLICATION

(11) **EP 3 020 589 A1**
(43) Date of publication of application: **18.05.2016**
(21) Application number: 14822343.1
(22) Date of filing: 03.06.2014
(51) Int. Cl.: B60K 35/00, B60K 37/02, B62D 1/04, B62D 1/06

(54) **STEERING WHEEL HAVING DISPLAY DEVICE**

(30) Priority: 08.07.2013 KR 20130079630
(71) Applicant: R&Ders Co. Ltd., Wanju-gun, Jeollabuk-do 565-902 (KR)
(72) Inventor: JANG, Yoon Sik, Wanju-gun Jeollabuk-do 565-902 (KR)
(74) Representative: Peters, Sebastian Martinus
(86) International application number: PCT/KR2014/004957
(87) International publication number: WO 2015/005587

(57) **Abstract**

The present invention relates to a steering wheel, and more particularly, to a steering wheel for a vehicle (vehicle steering wheel for game), having a display device for providing various pieces of vehicle information (vehicle driving record information, engine rotation speed information, vehicle state information, static warning information and dynamic warning information) related to a driving state and operation of each device. The present invention provides a steering wheel having a rim or a hub, on the upper end of which a display device for displaying various pieces of vehicle information is mounted, to make it unnecessary to install a separate gauge board on a dashboard of the vehicle, thereby reducing production costs and weights of a vehicle. Moreover, the present invention can fundamentally prevent a glare phenomenon, which may be generated by the gauge board of the vehicle installed on a conventional dashboard, and can implement a vehicle with low power consumption due to the non-installation of the gauge board. Therefore, the present invention is suitable for an electric vehicle and a hybrid vehicle.

## Description

### Technical Field

The present invention relates to a steering wheel, and in particular to a steering wheel in a vehicle steering wheel (or a vehicle steering wheel for a game, etc.) which equips with a display device configured to show various vehicle information (a vehicle running record information, an engine rotation speed information, a vehicle state information, a static warning information, and a dynamic warning information) on a vehicle drive state and operations of each device.

### Background Art

For the sake of a safe running of a vehicle, the vehicle in general includes an instrument panel at a dashboard disposed at a forward side of a driver's seat so as to provide a driver with accurate information on a drive state and operations of each device. The above instrument panel may be formed of an analog meter and an indication lamp, and in recent years it is formed of an electric meter using an electronic meter, and a digital or bar graph indication lamp which uses a light emitting diode, a fluorescence indication plate, etc.

The vehicle equipped with a vehicle steering wheel between an instrument panel installed at a dash board of a vehicle and a driver's seat, wherein the vehicle steering wheel is called a steering wheel, a driving wheel, a steering handle, etc. The above vehicle steering wheel is formed of a circular or almost elliptical rim that a driver can grab. In the center of such as a vehicle steering wheel, a horn or an airbag is installed. In recent years, an audio controller is disposed in the center thereof.

The vehicle steering wheel may hide a part of the instrument panel since it positions between the instrument panel and a driver, more specifically, it may position on a driver's viewing line when the drive views the instrument panel. In a vehicle which equips with a function for adjusting the angle of a vehicle steering wheel so as to adjust the height of a vehicle steering wheel, the major portions of the instrument panel may be hidden depending on a driver's body condition, whereupon it is hard to secure a good viewing state with respect to the instrument panel. For this reason, even though the instrument panel is installed so as to provide various information on the vehicle to the driver, the driver may not be actually provided with intended assistances, thus causing an efficiency problem.

In order to resolve the above-mentioned problem, the Korean patent publication number 10-2005-0032214 (the publication date: April 7, 2005) describes a steering wheel for a vehicle, which is able to improve any hindrance caused due to the presence of the steering wheel when the driver views the instrument panel. In the above prior technology, a movable unit separately installed with respect to a ring is provided to switch an operation between a state where a diver's viewing is not interrupted with respect to the instrument panel and a state where a normal appearance of the steering wheel is obtained, so it is possible to greatly secure a driver's uninterrupted viewing toward the instrument panel, if necessary.

In the above prior technology, a movable unit which moves straightly, an elastically supporting spring which is able to elastically support the movable unit, a fixing unit which is able to fix and maintain a state where the movable unit has moved straightly for the sake of the securing of views toward the instrument panel, etc. are separately provided in a circular ring space unit of the steering wheel. To this end, the structure of the steering wheel may become complicated. Since the driver needs to handle the movable unit during the driving, a problem may occur, for example, any accidents, etc. may occur.

The display device for a vehicle steering wheel which displays various vehicle information on a vehicle steering wheel is disclosed in the Japanese patent publication number 2004-148911 (the publication date: May 27, 2004), the Japanese patent publication number 2003-341524 (the publication date: December 3, 2003), the Japanese patent publication number 2005-088792 (the publication date: April 7, 2005), and the Korean patent publication number 10-2008-0065787 (the publication date: July 15, 2008).

According to the above listed prior technologies, it may be possible to obtain an effect to provide a vehicle information to a driver, while not securing an uninterrupted viewing toward an instrument panel, in such a way to display a vehicle information on a display device which is mounted on a vehicle steering wheel, but there is a limit in displaying various vehicle information due to the limits to the size and shape of the vehicle steering wheel. For this reason, it is very limited to display various information, for example, only limited information should be provided among various information. So, the driver should drive the vehicle only depending on the information shown on the instrument panel mounted at the dashboard of the vehicle.

### Summary of the Invention

### Disclosure of Invention

Accordingly, the present invention is made in an effort to resolve the above mentioned problems. It is an object of the present invention to provide a steering wheel having a display device which is able to provide various vehicle information (a vehicle running record information, an engine rotation speed information, a vehicle state information, a static warning information, and a dynamic warning information) which can be provided using a conventional vehicle instrument panel, without separately installing an instrument panel at a dashboard of a vehicle.

It is another object of the present invention to provide a steering wheel having a display device which has a good visibility while providing various information irrespective of a steering angle of a steering wheel.

### Technical Solution

To achieve the above objects, there is provided a steering wheel having a display device which is formed of a rim; a hub disposed in the center of the inside of the rim; and a spoke, which may include, but is not limited to, a display device which is mounted on the top of the rim of the hub in a forward direction of a driver's seat and is able to group vehicle information into a plurality of group information and sequentially display them in a previously set order; and a mode selection button which is able to control the display orders of a plurality of the group information displayed on the display device, wherein the display device receives a steering angle detection signal corresponding to a steering angle of the steering wheel provided from a steering angle sensor and inverts and displays the upper and lower sides of the group information, which is currently being provided, if the steering angle detection signal is a signal which is in a set angle range.

Preferably, the display device is able to sequentially display a plurality of the group information based on a previously set order in response to an operation of the mode selection button.

Preferably, the display device is able to sequentially display a plurality of the group information based on a previously set order at a previously set time interval.

Preferably, the vehicle information includes a vehicle running record information, an engine rotation speed information, a vehicle state information, a static warning information, and a dynamic warning information, and the group information is grouped with the vehicle running record information, the engine rotation speed information, the vehicle state information, the static warning information or the dynamic warning information or is grouped by mixing the vehicle running record information, the engine rotation speed information, the vehicle state information, the static warning information and the dynamic warning information.

Preferably, the display device displays at least one event information between the static warning information and the dynamic warning information together with the group information, which are currently being provided, if a warning event occurs at the vehicle while a plurality of the group information are being provided.

Preferably, the display device simultaneously displays corresponding group information among a plurality of the group information on one display screen, and the display screen is divided in a row direction into a plurality of sections, and a vehicle information included in each group information is displayed one by one in each divided section.

Preferably, the display device receives a steering angle detection signal corresponding to a steering angle of a steering wheel provided from a steering angle sensor and inverts and provides the upper and lower sides of the group information, which is currently being provided, if the steering angle detection signal is within a set angle range.

Preferably, the set angle is 150 ~ 210°.

Preferably, the mode selection button is installed at a lower right portion of the hub.

Preferably, the display device includes a CAN communication unit which receives the vehicle information via a vehicle main CAN LINE; a vehicle information receiving unit which receives the vehicle information from the CAN communication unit; a digital signal conversion unit which converts the vehicle information transmitted from the vehicle information receiving unit into a digital signal; a control unit which allows to group the vehicle information converted into a digital signal by the digital signal conversion unit into a plurality of group information based on importance and a driver's preference and sequentially provide a plurality of the grouped group information in a previously set order in response to a control of the mode selection button; and a display panel which displays a plurality of the group information in an order transmitted from the control unit.

Preferably, the control unit receives a steering angle detection signal corresponding to a steering angle of a steering wheel provided from a steering angle sensor and inverts and provides the upper and lower sides of the group information, which is currently being provided, if the steering angle detection signal is within a set angle range.

### Advantageous Effects

As mentioned above, the present invention provides a steering wheel having a rim or a hub, on the upper end of which a display device for displaying various pieces of vehicle information is mounted, to make it unnecessary to install a separate gauge board on a dashboard of the vehicle, thereby reducing production costs and weights of a vehicle. Moreover, the present invention can fundamentally prevent a glare phenomenon, which may be generated by the gauge board of the vehicle installed on a conventional dashboard, and can implement a vehicle with low power consumption due to the non-installation of the gauge board. Therefore, the present invention is suitable for an electric vehicle and a hybrid vehicle.

The present invention will fundamentally resolve a problem wherein only major information are limitedly provided due to a limited space of a steering wheel in such a way to selectively provide a vehicle information which will be displayed on a display device, by providing a steering wheel which is formed of a mode selection button.

According to the present invention, it is possible to enhance the visibility of vehicle information irrespective of a steering angle of a steering wheel in such a way to provide a steering wheel which equips with a display device which is able to invert and display vehicle information being displayed based on a steering angle of a steering wheel in response to a steering angle detection signal detected by a steering angle sensor.

### Brief Description of Drawings

Figure 1 is a front view illustrating a steering wheel according to an exemplary embodiment of the present invention.
Figure 2 is a block diagram illustrating a display device according to the present invention.
Figure 3 is a view for describing a vehicle information display state when a steering wheel rotates 180° according to the present invention.
Figure 4 is a flow chart for describing a vehicle information display method using a steering wheel according to an exemplary embodiment of the present invention.
Figure 5 is a flow chart for describing a group information providing method in Figure 4.
Figure 6 is a flow chart for describing a group information providing method according to another example of the present invention.
Figure 7 is a front view illustrating a steering wheel according to another exemplary embodiment of the present invention.

### Modes for carrying out the invention

The advantages, features of the present invention and a way to achieve the same will become apparent with reference to the embodiment descriptions which will be described below together with the accompanying drawings. The present invention is not limited to the disclosure below and may be implemented in various forms.

In the present specification, the embodiments are provided to more clarify the disclosure of the present invention and inform the scope of the present invention to a person having ordinary skill in the art. The present invention is defined only by the scope of claims below. In a few embodiments, known components, operations and technologies are not described in detail so as to avoid the present invention from being ambiguously interpreted.

Throughout the specification, the same reference numbers represent the same components. The terms used (mentioned) in the present specification are provided to describe the exemplary embodiments, and are not intended to limit the present invention. In the present specification, a singular form, unless otherwise particularly stated, should be interpreted as including plural forms. Moreover, any component and operation described with a term "comprise (or include)" should be interpreted as not excluding that at least one or more component or operation may be present or added.

Unless otherwise defined, all the terms (including technology and science terms) used in the present specification may be used as meanings which a person having ordinary skill in the art can commonly understand. The terms defined in a dictionary which in general is being used should not be ideally or over interpreted unless otherwise defined.

The technical features of the present invention will be described in detail with reference to the accompanying drawings.

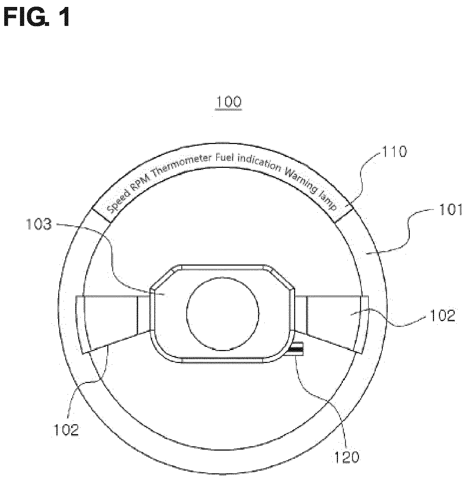

Figure 1 is a front view illustrating a steering wheel according to an exemplary embodiment of the present invention.

Referring to Figure 1, the steering wheel 100 according to an exemplary embodiment of the present invention may include, but is not limited to, a circular or elliptical rim 101; a spoke 102; a hub 103; a display device 110 which is mounted on the top of the rim 101 in a forward direction of a driver's seat so as to display various vehicle information; and a mode selection button 120 which is provided to select a vehicle information displayed on the display device 110.

As illustrated in Figure 1, in the steering wheel 100 according to an exemplary embodiment of the present invention, the spoke 102 is provided two in number at the left and right sides when viewing from the front side so as to divide the circular rim 101 into upper and lower parts. This is just one example. The number of the spokes 102 is not limited. Three or four spokes 102 may be installed.

As illustrated in Figure 1, the display device 110 may be installed on the top of the rim 101, and it may be preferably engaged in the inside of a groove formed on the top of the rim 101 with the aid of an engaging member (not illustrated). The engaging member may have a protrusion and may be tightly fit into an insertion groove formed at a groove of the rim 101 or may be a fixing frame which can be engaged using a bolt or a screw.

The display device 110 is able to display in the forms of numbers or graphics (a warning lamp) a running record information including a driving speed, an accumulated driving distance, a section driving distance, etc. of a driving vehicle; an engine rotation speed information including an engine revolution (rpm), etc.; a vehicle state information including a fuel, a water temperature, an engine temperature, etc.; a static warning information including a door open warning lamp, a safety belt non-wearing warning lamp, an engine oil shortage warning lamp; a battery low warning lamp, etc.; and a dynamic warning information including a direction change indication lamp, an emergency lamp, an upward indication lamp, etc. which are operated by the operation of a driver.

The display device 110 according to the present invention is able to sequentially display, in a previously set priority order in response to a control of the mode selection button 120, a running record information, an engine rotation speed information, a vehicle state information, a static warning information and a dynamic warning information. The reason why the display device 110 sequentially displays the information in response to a control of the mode selection button 120 is that the display device 110 is mounted on the top of the rim 101 which has a limited size.

As illustrated in Figure 1, since the display device 110 is mounted on the top of the rim 101 which has a relatively limited size, there may be a limit in simultaneously displaying a running record information, an engine rotation speed information, a vehicle state information, a static warning information, a dynamic warning information, etc. as in a conventional vehicle instrument panel.

To this end, the display device 110 according to the present invention does not simultaneously display a running record information, an engine rotation speed information, a vehicle state information, a static warning information and a dynamic warning information, but groups the vehicle information based on a priority order previously set based on their importance or a driver's preference and then sequentially displays each information in group in response to a control of the mode selection button 120.

When the information are grouped so as to provide various vehicle information according to the present invention, a running record information, an engine revolution speed information, a vehicle state information, a static warning information and a dynamic warning information may be grouped or a running record information, an engine rotation speed information, a vehicle state information, a static warning information and a dynamic warning information may be appropriately mixed and grouped based on their importance or a driver's preference.

For example, as seen in Table 1 below, the display device 110 according to the present invention may divide a display section of a screen into five sections (1st to 5th) sequentially in the row direction, so it is possible to display, in response to a control of the mode selection button 120, the group information which are previously and sequentially set in an order of the 1st to 5th steps. Here the Table 1 shows just a grouped example. The information grouped by each step may be appropriately changed in consideration of their importance and a driver's preference.

**Table 1**

| Steps | 1st | 2nd | 3rd | 4th | 5th |
|---|---|---|---|---|---|
| 1 | Driving speed | Accumulated driving distance | Section driving distance | Event information | Event information |
| 2 | Revolution of engine (rpm) | Event information | Event information | Event information | Event information |
| 3 | Fuel | Water temperature | Engine temperature | Event information | Event information |
| 4 | Door open warning lamp | Safety bet non-warning warning lamp | Engine oil shortage warning lamp | Battery low warning lamp | Event information |
| 5 | Direction change indication lamp (emergency lamp) | Upward indication lamp | Event information | Event information | Event information |

As seen in Table 1, the event information is any one between the static warning information and the dynamic warning information. If a warning event occurs, for example, if a driver's operation or vehicle state changes, the display device 110 may display the event information together with the group information which is being currently provided.

More specifically, the above operation will be described with one example. In the 1st step, in a state where the running record information are displayed in the 1st section to the 3rd section are displayed, if the driver operates the direction change lever, the direction change indication lamp is preferentially activated and displayed in the 5th section. In this state, if the door of the vehicle is opened, the door open warning lamp is activated and indicated in the 4th section.

According to another example, as seen in Table 2 below, if various vehicle information are mixed and grouped, the display section of the display device 110 is sequentially divided into five sections (1st to 5th) in the row direction. For example, the running record information may be indicated in the 1st section (1st), the engine rotation speed information may be indicated in the 2nd section (2nd), the vehicle state information may be indicated in the 3rd region (3rd), the static warning information may be indicated in the 4th region (4th), and the dynamic warning information may be indicated in the 5th region (5th).

**Table 2**

| Steps | 1^{st} | 2nd | 3rd | 4th | 5th |
|---|---|---|---|---|---|
| 1 | Driving speed | Engine revolution (rpm) | Fuel | Door open warning lamp | Direction change indication lamp (emergency lamp) |
| 2 | Accumulated driving distance | Engine revolution (rpm) | Water temperature | Safety belt non-wearing warning lamp | Upward indication lamp |
| 3 | Section driving distance | Engine revolution (rpm) | Engine temperature | Engine oil shortage warning lamp | Direction change indication lamp(emergency lamp) |
| 4 | Driving speed | Engine revolution (rpm) | Fuel | Battery low warning lamp | Upward indication lamp |

As seen in Table 2, the display device 110, for example, may provide a group information which has been previously set in an order from the 1st step to the 4th step in response to a control of the mode selection button 120. At this time, Table 2 shows an example of such a group for the sake of convenient descriptions. The information grouped for each step may be appropriately changed in consideration of importance and a driver's preference.

As described in Figure 1, the mode selection button 120 is preferably installed at a lower right side of the hub 103 for the sake of easier reaches, not interfering with the driver's driving.

The mode selection button 120 may provide an operation mode including a manual mode and an automatic mode.

In the manual mode, the driver can sequentially display the group information for each step by controlling the mode selection button 120, and in the automatic mode, the group information for each step can be sequentially displayed at a predetermined time interval unless the driver controls the mode selection mode 120. For example, in the automatic mode, the steps may be switched at an interval of 10 seconds to 20 seconds.

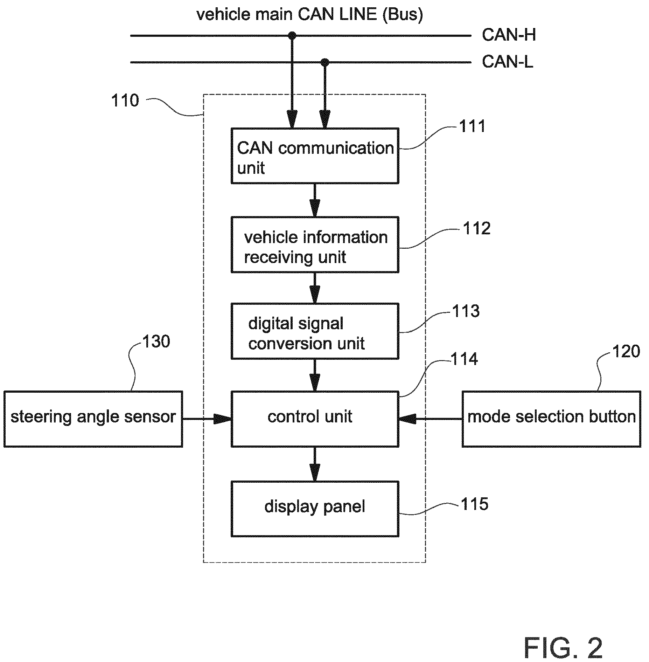

Figure 2 is a block diagram for describing the display device according to the present invention.

Referring to Figures 1 and 2, the display device 110 may receive a vehicle running record information, an engine rotation speed information, a vehicle state information, a static warning information, and a dynamic warning information from the vehicle in the same way as the conventional instrument panel and may display based on the operation mode of the mode selection button 120.

The display device 110 may receive, from a vehicle main CAN LINE, a vehicle running record information, an engine rotation speed information, a vehicle state information, a static warning information, and a dynamic warning information which are vehicle's measuring instrument signals.

Since the CAN communication via a vehicle main CAN LINE forms a network in the bus method, a plurality of processors may share, if necessary, the data sent from each processor. To this end, the display device 110 is connected to a CAN driver via two lines (CAN_H and CAN_L), thus communicating with various units of the vehicle.

As illustrated in Figure 2, the display device 110 may include, but is not limited to, a CAN communication unit 111; a vehicle information receiving unit 112; a digital signal conversion unit 113; a control unit 114; and a display panel 115.

The CAN communication unit 111 is provided to carry out a CAN communication so as to stably receive vehicle information, for example, a vehicle running record information, an engine rotation speed information, a vehicle state information, a static warning information, and a dynamic warning information which are transmitted in real time from the vehicle main CAN LNE. This CAN communication unit 111 transmits the vehicle information received from the vehicle main CAN LINE to the vehicle information receiving unit 112.

The vehicle information receiving unit 112 transmits the vehicle information transmitted from the CAN communication unit 111 to the digital signal conversion unit 113.

The digital signal conversion unit 113 converts the vehicle information received via the vehicle information receiving unit 112 into a digital signal and transmits to the control unit 114. More specifically, since the CAN communication unit 111 receives an analog type vehicle information from the vehicle main CAN LINE, it needs to convert into a digital signal so as to display a digital type vehicle information on the display panel 115.

The control unit 114 controls the whole operations of the display device 110. More specifically, the control unit 114 receives a digital type vehicle information received from the digital signal conversion unit 113 and outputs the received vehicle information on the display panel 115.

As described above, the control unit 114 may previously set the order for sequentially displaying the vehicle information based on importance and a driver's preference and may output to the display panel 115.

A vehicle running record information, an engine rotation speed information, a vehicle state information, a static warning information, and a dynamic warning information received from the digital signal conversion unit 113 may be grouped based on the previously set priority order, and each group information may be sequentially provided to the display panel 115.

At this time, the control unit 114 may group a vehicle running record information, an engine rotation speed information, a vehicle state information, a static warning information, and a dynamic warning information which are seen in Table 1 or may mix and group a vehicle running record information, an engine rotation speed information, a vehicle state information, a static warning information, and a dynamic warning information based on importance and a driver's preference, which are seen in Table 2.

As illustrated in Figure 2, the control unit 114 may set the operation mode in response to the mode selection button 120. For example, if the operation mode is set to the manual mode by the mode selection button 120, the group information grouped in response to the mode selection button 120 may be sequentially provided to the display panel 115, and if the mode is set to the automatic mode, the group information for each step may be sequentially provided to the display panel 115 at a predetermined time interval irrespective of the operation of the mode selection button 120. For example, in the automatic mode, such information may be provided at a time interval of 5 seconds to 10 seconds.

The display panel 115 may be formed of any of a LCD (Liquid Crystal Display) panel, a LED (Light Emitting Diode) panel and an OLED (Organic Light Emitting Diode) panel. The present invention may include all kinds of display panels which may be used for the display device.

The display panel 115 receives the digital type vehicle information from the control unit 114 and displays the same. At this time, the display panel 115 may divide the display section of a screen into five sections so as to sequentially display vehicle information.

As illustrated in Figure 2, the control unit 114 may invert the vehicle information displayed on the display panel 115 in response to a detection signal inputted from the steering angle sensor 130.

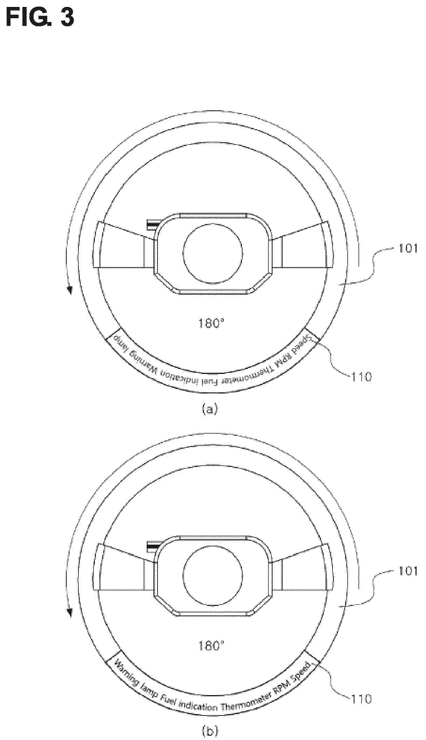

Figure 3 is a view for describing the vehicle information display method of a display device when the steering wheel rotates 180°, of which Figure 3A is a view illustrating that the vehicle information display of the display device is not inverted, and Figure 3B is a view illustrating that the vehicle information display of the display device is inverted.

The steering angle of the steering wheel 100 according to the present invention can be changed as the driver rotates during the driving. For example, as illustrated in Figure 3A, if the steering angle of the steering wheel 100 is 180°, the upper and lower sides of the vehicle information displayed on the display device 110 may inverted. In this case, the driver cannot accurately recognize the vehicle information.

To this end, the display device 110 according to the present invention may receive a signal corresponding to the steering angle of the steering wheel 100 detected in real time by the steering angle sensor 130 and may invert the upper and lower sides of the vehicle information, as illustrated in Figure 3B, displayed on the display device 110 and then can provide the driver with the vehicle information which is always accurate irrespective of the steering angle of the steering wheel 100.

As illustrated in Figure 2, the control unit 114 may receive a steering angle detection signal from the steering angle sensor 130 and may invert and provide the upper and lower sides of the vehicle information displayed on the display panel 115 in response to the steering angle detection signal. For example, if the steering angle detection signal provided from the steering angle sensor 130 is within a set angle range of steering wheel 100, the control unit 114 may invert and the upper and lower sides of the vehicle information displayed on the display panel 115 and display the inverted information.

The steering angle sensor 130 may be installed at the steering wheel 100 or another portion of the vehicle. If it is installed at the steering wheel 100, the steering angle detection signal may be transmitted to the display device 110 via a connector. If it is installed at another portion of the vehicle, the steering angle detection signal may be transmitted to the display device 110 via a main CAN LINE as illustrated in Figure 2.

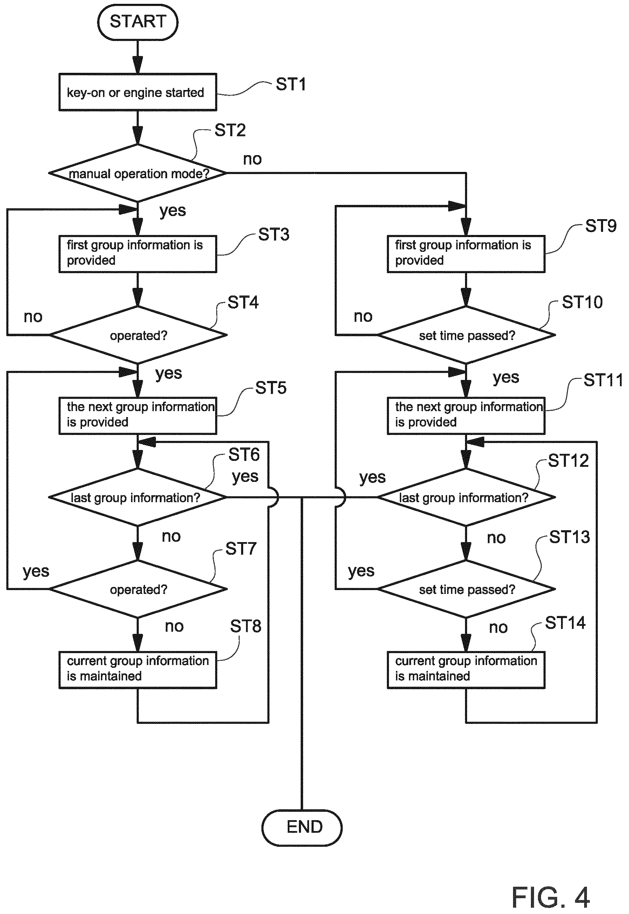

Figure 4 is a flow chart for describing a vehicle information display method using a steering wheel according to an exemplary embodiment of the present invention.

Referring to Figures 1, 2 and 4, if the vehicle is in a key-on state or is in an engine-started state, and the operation mode of the display device 110 is set to the manual mode using the mode selection button 120, the display device 110 first displays the first group information on the display panel 115 (ST1 to ST3).

In a state where the display panel 115 is displaying the vehicle information corresponding to the first group information, if the driver operates the mode selection button 120 (namely, the driver pushes the button), the display device 110 will display the second group information which is the next group information on the display panel 115 (ST4 and ST5).

Thereafter, in a state where the next group information displayed on the display panel 115 does not correspond to the last group information (namely, the fifth group information), if the driver does not operate the mode selection button 120, the display device 110 does not display the next group information, but directly displays the group information which is currently being displayed (ST6 to ST8). Meanwhile, in the step ST7, if the driver presses the mode selection button 120, the display device 110 will display the next group information.

The display device 110 may repeatedly operate until the group information, which is currently being displayed, becomes the last group information. If the display of the last group information on the display panel 115 is finished, the display is repeatedly performed again from the first group information in response to an operation of the mode selection button 120.

Meanwhile, in the step ST2, if the operation mode of the display device 110 is set to the automatic mode by the mode selection button 120, the first group information may be displayed on the display panel 115 (ST2 and ST9).

In a state where the display panel 115 is displaying the first group information, if the set time passes, the display device 110 will display the next group information, namely, the second group information on the display panel 115 (ST10 and ST11). At this time, the set time may be 10 seconds to 20 seconds.

If the next group information which is displayed on the display panel 115 is not the last group information (the fifth group information), and the set time has not passed, the display device 110 does not display the next group information, but displays, as it is, the group information which is currently being displayed (ST12 to ST14).

In the same way as the manual mode, in the automatic mode, the display device 110 repeatedly displays until the group information, which is currently being displayed, becomes the last group information. If the display of the last group information on the display panel 115 is finished, the above operation is repeatedly performed based on a set time from the first group information.

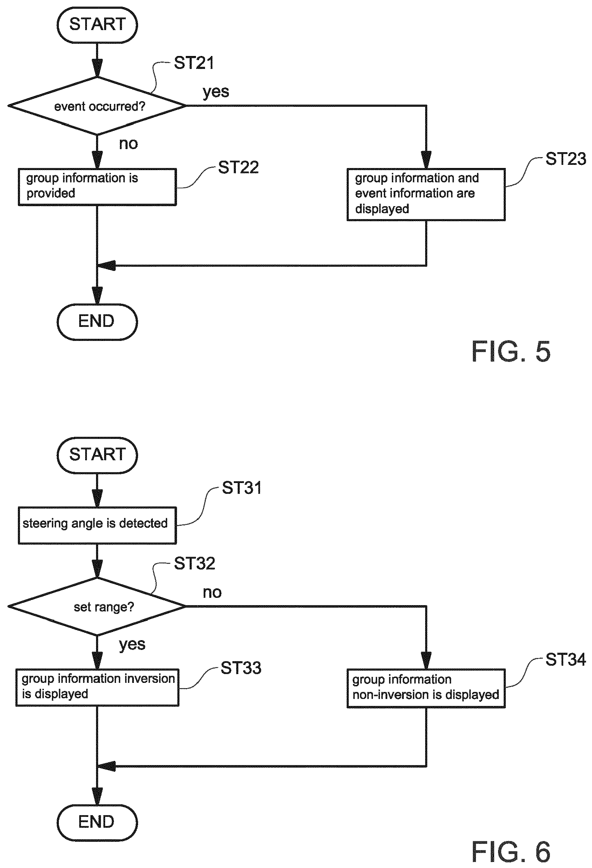

Figure 5 is a flow chart for describing the group information providing method illustrated in Figure 4.

Referring to Figures 2, 4 and 5, as seen in Table 1, if any event does not occur in the vehicle, the display device 110 will display a corresponding group information, and if any event occurs in the vehicle, each group information and event information will be displayed (ST21 to ST23). At this time, the event information may be any one between the static warning information and the dynamic warning information.

Figure 6 is a flow chart for describing the group information providing method according to another exemplary embodiment of the present invention.

Referring to Figures 2, 4 and 6, if the steering angle of the steering wheel 100 inputted from the steering angle sensor 130 is within a set angle range, namely, in a range of 150° to 230° while the display device 110 is displaying a corresponding group information, the group information which is currently being displayed is inverted, so the accurate vehicle information can be always provided to the driver irrespective of the steering angle of the steering wheel 100 (ST31 to ST34).

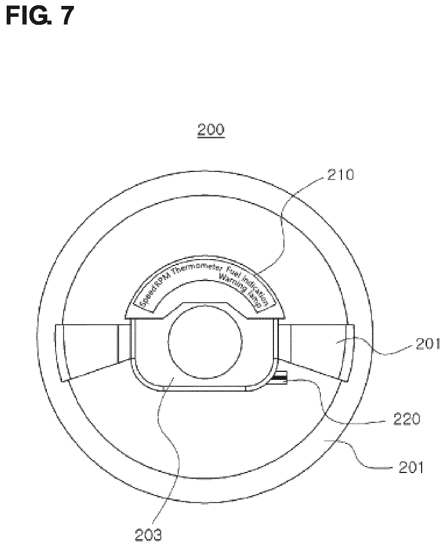

Figure 7 is a front view illustrating a steering wheel according to another exemplary embodiment of the present invention.

Referring to Figure 7, as in the steering wheel 100 in Figure 1, the steering wheel 200 according to another exemplary embodiment of the present invention may include, but is not limited to, a circular or elliptical rim 201; a spoke 202; a hub 203; a display device 210; and a mode selection button 220.

The display device 210 may be formed in the same way as the display device 110 of the steering wheel 100 in Figure 1 and may be mounted on the top of the hub 203, not on the rim 201. In the another exemplary embodiment of the present invention, except for the configuration wherein the display device 210 is installed, the configuration of the rim 201, the spoke 202, the hub 203 and the mode selection button 220 are same as the configuration of the rim 101, the spoke 102, the hub 103 and the mode selection button 120 of the steering wheel 100 illustrated in Figure 1.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A steering wheel having a display device which is formed of a rim; a hub disposed in the center of the inside of the rim; and a spoke, comprising:
a display device which is mounted on the top of the rim of the hub in a forward direction of a driver's seat and is able to group vehicle information into a plurality of group information and sequentially display them in a previously set order; and
a mode selection button which is able to control the display orders of a plurality of the group information displayed on the display device,
wherein the display device receives a steering angle detection signal corresponding to a steering angle of the steering wheel provided from a steering angle sensor and inverts and displays the upper and lower sides of the group information, which is currently being provided, if the steering angle detection signal is a signal which is in a set angle range.

2. The steering wheel of claim 1, wherein the display device is able to sequentially display a plurality of the group information based on a previously set order in response to an operation of the mode selection button.

3. The steering wheel of claim 1, wherein the display device is able to sequentially display a plurality of the group information based on a previously set order at a previously set time interval.

4. The steering wheel of claim 1, wherein the vehicle information includes a vehicle running record information, an engine rotation speed information, a vehicle state information, a static warning information, and a dynamic warning information, and the group information is grouped with the vehicle running record information, the engine rotation speed information, the vehicle state information, the static warning information or the dynamic warning information or is grouped by mixing the vehicle running record information, the engine rotation speed information, the vehicle state information, the static warning information and the dynamic warning information.

5. The steering wheel of claim 4, wherein the display device displays at least one event information between the static warning information and the dynamic warning information together with the group information, which are currently being provided, if a warning event occurs at the vehicle while a plurality of the group information are being provided.

6. The steering wheel of claim 4, wherein the display device simultaneously displays corresponding group information among a plurality of the group information on one display screen, and the display screen is divided in a row direction into a plurality of sections, and a vehicle information included in each group information is displayed one by one in each divided section.

7. The steering wheel of claim 1, wherein the set angle is 150 ~ 210°.

8. The steering wheel of claim 1, wherein the mode selection button is installed at a lower right portion of the hub.

9. The steering wheel of claim 1, wherein the display device includes:
a CAN communication unit which receives the vehicle information via a vehicle main CAN LINE;
a vehicle information receiving unit which receives the vehicle information from the CAN communication unit;
a digital signal conversion unit which converts the vehicle information transmitted from the vehicle information receiving unit into a digital signal;
a control unit which allows to group the vehicle information converted into a digital signal by the digital signal conversion unit into a plurality of group information based on importance and a driver's preference and sequentially provide a plurality of the grouped group information in a previously set order in response to a control of the mode selection button; and
a display panel which displays a plurality of the group information in an order transmitted from the control unit.

10. The steering wheel of claim 9, wherein the control unit receives a steering angle detection signal corresponding to a steering angle of a steering wheel provided from a steering angle sensor and inverts and provides the upper and lower sides of the group information, which is currently being provided, if the steering angle detection signal is within a set angle range.
